# EUROPEAN PATENT APPLICATION

(11) **EP 3 025 909 A1**
(43) Date of publication of application: **01.06.2016**
(21) Application number: 14896583.3
(22) Date of filing: 31.10.2014
(51) Int. Cl.: B60Q 3/00, B60Q 3/02

(54) **SYSTEM AND METHOD FOR TURNING ON LAMP LINKED WITH VEHICLE SEAT POSITION**

(30) Priority: 30.06.2014 KR 20140080991
(71) Applicant: Daesung Electric Co., Ltd, Gyeonggi-do 425-851 (KR)
(72) Inventor: KWAK, Byoung Hoon, Hwaseong-si Gyeonggi-do 445-792 (KR); KIM, Tae Hyung, Suwon-si Gyeonggi-do 440-710 (KR)
(74) Representative: Stöckeler, Ferdinand
(86) International application number: PCT/KR2014/010365
(87) International publication number: WO 2016/003021

(57) **Abstract**

The present invention relates to a system and a method for turning on a lamp linked with a vehicle seat position, capable of: automatically turning on a lamp corresponding to a seat position by moving, forward or backward, the position of a seat on which a driver or a passenger sits in the indoor lighting of a vehicle; and adjusting the lighting of the lamp according to a light distribution standard for a vehicle. The system for turning on a lamp linked with a vehicle seat position, according to the present invention, comprises: a vehicle seat capable of moving forward or backward; a lamp lighting unit provided with one or more lamps corresponding to a stop position according to the movement of the vehicle seat; a seat information memory unit for storing seat position information according to the stop position of the vehicle seat; and a control unit turning on the lamps corresponding to the stop position of the vehicle seat on the basis of the seat position information such that the vehicle seat at the stop position is controlled to be lit.

## Description

### BACKGROUND OF THE INVENTION

### Field of the Invention

Exemplary embodiments of the present invention relate to a system and method for lighting a lamp operatively connected to a vehicle seat position, and more particularly, to a system and method for lighting a lamp operatively connected to a vehicle seat position, in which when the position of a driver seat or an occupant seat is moved forward or rearward in vehicle interior illumination, a lamp located corresponding to the seat position is automatically turned on and the lighting of the lamp is adjustable according to light distribution criteria for vehicle illumination.

### Description of the Related Art

In general, lamps are installed in vehicles to illuminate drivers or occupants seated in the interior of the vehicles or to illuminate the interior thereof.

However, the light distribution angles of lamps may not be adjusted according to the body types or tastes of drivers or occupants since the lamps are fixed even when the driver or occupant seats are moved forward or rearward so as to be suitable for the body sizes of drivers or occupants, in conventional vehicle illumination.

That is, since the light distribution angles of vehicle interior lamps are fixed, it is impossible to change the light distribution angles of the fixed lamps even when seat positions are changed according to the body types of drivers or occupants.

In addition, when the seat positions are moved forward or rearward, the lighting of the fixed lamps may be blocked by the bodies of drivers or the fixed lamps may illuminate unnecessary places due to the light distribution of the fixed lamps.

Accordingly, in order to resolve light distribution angle problems according to seat movement, widening light distribution angles may adversely affect drivers and occupants.

Meanwhile, the method of manually adjusting light distribution angles in a vehicle interior causes inconvenience for a user to use lamps, and is difficult to adjust light distribution angles defined by light distribution criteria for vehicle illumination.

Bulb lamps are less affected by seat movement since they have wide light distribution angles, but the light distribution angles of LED lamps may be significantly affected due to straightness of LEDs.

### SUMMARY OF THE INVENTION

An object of the present invention is to provide a system and method for lighting a lamp operatively connected to a vehicle seat position, in which when the position of a driver seat or an occupant seat is moved forward or rearward in vehicle interior illumination, a lamp located corresponding to the seat position is automatically turned on and the lighting of the lamp is adjustable according to light distribution criteria for vehicle illumination.

In accordance with one aspect of the present invention, a system for lighting a lamp operatively connected to a vehicle seat position includes a vehicle seat movable forward or rearward, a lamp illumination unit including one or more lamps corresponding to stop positions according to movement of the vehicle seat, a seat information memory unit for storing seat position information according to the stop positions of the vehicle seat, and a control unit for controlling the lamps such that the lamps corresponding to the stop positions of the vehicle seat are turned on for illuminating the vehicle seat corresponding thereto, based on the seat position information.

The lamp illumination unit may include a second lamp having a second light distribution angle for illuminating a vehicle seat stopped at a reference position, a first lamp having a first light distribution angle for illuminating a vehicle seat which is moved forward from the reference position and is then stopped, and a third lamp having a third light distribution angle for illuminating a vehicle seat which is moved rearward from the reference position and is than stopped.

The seat information memory unit may store reference position information when the vehicle seat is stopped at a reference position, forward position information when the vehicle seat is moved forward from the reference position and is then stopped, and rearward position information when the vehicle seat is moved rearward from the reference position and is then stopped.

The control unit may control a first lamp such that the first lamp is turned on for illuminating a vehicle seat, which is moved forward from the reference position and is then stopped, when the seat position information stored in the seat information memory unit is the forward position information, control a second lamp such that the second lamp is turned on for illuminating a vehicle seat, which is stopped at the reference position, when the seat position information stored in the seat information memory unit is the reference position information, and control a third lamp such that the third lamp is turned on for illuminating a vehicle seat, which is moved rearward from the reference position and is then stopped, when the seat position information stored in the seat information memory unit is the rearward position information.

The control unit may adjust brightness of first, second, and third lamps when they are turned on, and control the first, second, and third lamps for illuminating the associated vehicle seat.

In accordance with another aspect of the present invention, there is provided a method for lighting a lamp operatively connected to a vehicle seat position in a system having one or more lamps corresponding to stop positions according to movement of a vehicle seat. The method includes (a) stopping the vehicle seat at a reference position or moving the vehicle seat forward or rearward from the reference position, (b) storing seat position information, when the vehicle seat is moved and then stopped, in a seat information memory unit, and (c) lighting lamps corresponding to the positions of the vehicle seat, based on the seat position information stored in the seat information memory unit, by a control unit.

In the above (a), in a state in which a second lamp having a second light distribution angle for illuminating a vehicle seat stopped at the reference position, a first lamp having a first light distribution angle for illuminating a vehicle seat which is moved forward from the reference position and is then stopped, and a third lamp having a third light distribution angle for illuminating a vehicle seat which is moved rearward from the reference position and is than stopped, are installed to a ceiling of a vehicle, the vehicle seat may be stopped at the reference position or be moved forward or rearward from the reference position.

In the above (b), the seat information memory unit may store reference position information when the vehicle seat is stopped at the reference position, forward position information when the vehicle seat is moved forward from the reference position and is then stopped, and rearward position information when the vehicle seat is moved rearward from the reference position and is then stopped.

In the above (c), the control units may control a first lamp such that the first lamp is turned on for illuminating a vehicle seat, which is moved forward from the reference position and is then stopped, when the seat position information stored in the seat information memory unit is the forward position information, control a second lamp such that the second lamp is turned on for illuminating a vehicle seat, which is stopped at the reference position, when the seat position information stored in the seat information memory unit is the reference position information, and control a third lamp such that the third lamp is turned on for illuminating a vehicle seat, which is moved rearward from the reference position and is then stopped, when the seat position information stored in the seat information memory unit is the rearward position information.

In the above (c), the control unit may adjust brightness of first, second, and third lamps when they are turned on, and control the first, second, and third lamps for illuminating the associated vehicle seat.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a diagram schematically illustrating the configuration of a system for lighting a lamp operatively connected to a vehicle seat position according to an embodiment of the present invention;
Fig. 2 is a view illustrating examples of a light distribution angle of an interior lamp when a typical vehicle seat is at a stop position;
Fig. 3 is a view illustrating the structure of a lamp illumination unit and an example in which the light distribution angles of lamps are changed according to the movement of a seat position, according to the embodiment of the present invention;
Fig. 4 is a flowchart for explaining a method for lighting a lamp operatively connected to a vehicle seat position according to an embodiment of the present invention;
Fig. 5 is a view illustrating an example in which a second lamp located corresponding to a reference position is turned on and illuminates a vehicle seat located at the reference position, according to the embodiment of the present invention;
Fig. 6 is a view illustrating an example in which a first lamp is turned on and illuminates a vehicle seat located in front of the reference position, according to the embodiment of the present invention;
Fig. 7 is a view illustrating an example in which a third lamp is turned on and illuminates a vehicle seat located behind the reference position, according to the embodiment of the present invention; and
Fig. 8 is a view illustrating examples in which the lamps having respective light distribution angles are adjusted to have different illumination brightness, according to the embodiment of the present invention.

### DESCRIPTION OF SPECIFIC EMBODIMENTS

Since various modifications may be performed on the exemplary embodiments according to the concept of the present invention and the embodiments of the present invention can be implemented in a wide range of varied forms, specific exemplary embodiments of the present invention will be described herein in detail with reference to the accompanying drawings of the exemplary embodiments of the present invention. However, the present invention will not be limited only to the specific exemplary embodiments of the present invention which are disclosed herein. Therefore, it should be understood that the scope and spirit of the present invention can be extended to all variations, equivalents, and replacements in addition to the accompanying drawings of the present invention.

A system for lighting a lamp operatively connected to a vehicle seat position according to exemplary embodiments of the present invention will be described below in more detail with reference to the accompanying drawings. Throughout the disclosure, like reference numerals refer to like parts throughout the various figures and embodiments of the present invention, and redundant description thereof will be omitted.

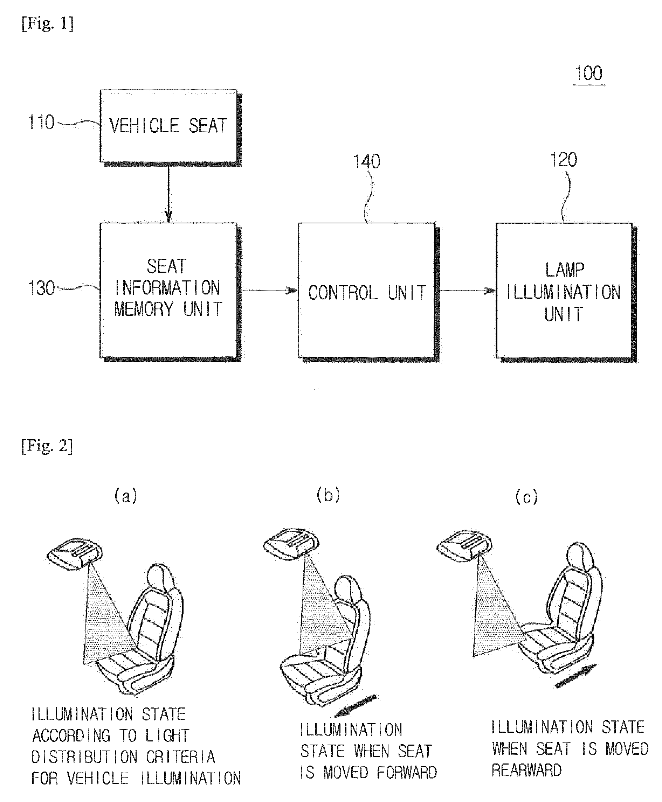

Fig. 1 is a diagram schematically illustrating the configuration of a system for lighting a lamp operatively connected to a vehicle seat position according to an embodiment of the present invention.

Referring to Fig. 1, the system for lighting a lamp operatively connected to a vehicle seat position, which is designated by reference numeral 100, according to the embodiment of the present invention includes a vehicle seat 110, a lamp illumination unit 120, a seat information memory unit 130, and a control unit 140.

The vehicle seat 110 is a seat in which a driver or an occupant boarding a vehicle is seated, and is mounted to be movable forward or rearward.

The lamp illumination unit 120 includes one or more LED lamps having light distribution angles which correspond to seat positions according to the movement of the vehicle seat.

The lamp illumination unit 120 is configured such that one or more LED lamps having light distribution angles are installed at different light distribution angles.

The lamp illumination unit 120 includes one or more lamps corresponding to positions when the vehicle seat 110 is moved and stopped.

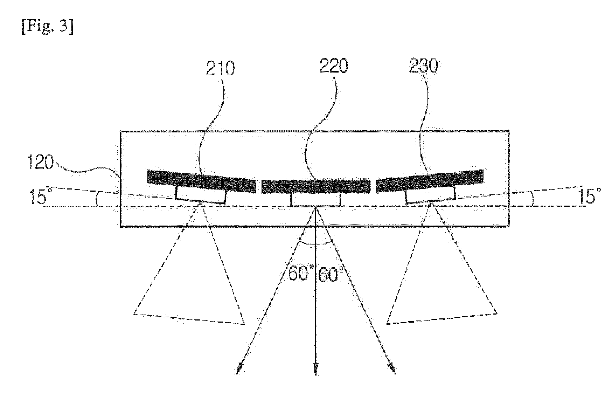

That is, as illustrated in Fig. 3, the lamp illumination unit 120 includes a second lamp 220 having a second light distribution angle for illuminating a vehicle seat 110 stopped at a reference position, a first lamp 210 having a first light distribution angle for illuminating a vehicle seat 110 which is moved forward from the reference position and is then stopped, and a third lamp 230 having a third light distribution angle for illuminating a vehicle seat 110 which is moved rearward from the reference position and is than stopped.

The seat information memory unit 130 stores seat position information when the vehicle seat 110 is moved and stopped.

That is, the seat information memory unit 130 stores reference position information when the vehicle seat 110 is stopped at the reference position, forward position information when the vehicle seat 110 is moved forward from the reference position and is then stopped, and rearward position information when the vehicle seat 110 is moved rearward from the reference position and is then stopped.

The control unit 140 controls lamps such that a lamp corresponding to a vehicle seat 110, which is stopped at any position, is turned on for illuminating the vehicle seat corresponding thereto, based on the seat position information stored in the seat information memory unit 130.

In addition, the control unit 140 controls LED lamps such that an LED lamp corresponding to a vehicle seat, which is moved and then stopped in any position, and having a light distribution angle corresponding thereto are turned on or off, or the LED lamps having respective light distribution angles are adjusted to have different illumination brightness.

Thus, the control unit 140 automatically changes the light distribution angles of the vehicle lamps using the seat position information.

Fig. 2 is a view illustrating examples of a light distribution angle of an interior lamp when a typical vehicle seat is at a stop position.

As illustrated in Fig. 2, the LED lamp provided within the vehicle is installed to illuminate the upper surface of the seat according to light distribution criteria for vehicle illumination. The LED lamp is attached to the ceiling of the vehicle interior so as to illuminate a portion in front of a driver or an occupant, as illustrated in Fig. 2(a), when the driver or the occupant is seated in the seat.

When the seat is moved forward as illustrated in Fig. 2(b) in order for the driver or occupant boarding the vehicle and seated in the seat to adjust the position of the seat so as to be suitable for the body type thereof, the driver or occupant seated in the seat is moved forward, but the LED lamp, which is fixedly attached to the ceiling of the vehicle, immediately illuminates the head of the driver or occupant rather than the front portion of the driver or occupant, thereby causing inconvenience for the driver or the occupant.

In addition, when the seat is moved rearward as illustrated in Fig. 2(c) in order for the driver or occupant boarding the vehicle and seated in the seat to adjust the position of the seat so as to be suitable for the body type thereof, the driver or occupant seated in the seat is moved rearward, but the LED lamp, which is fixedly attached to the ceiling of the vehicle, illuminates a portion directed further forward than the front portion of the driver or occupant, thereby causing inconvenience for the driver or the occupant.

Fig. 3 is a view illustrating the structure of the lamp illumination unit and an example in which the light distribution angles of the lamps are changed according to the movement of the seat position, according to the embodiment of the present invention.

Referring to Fig. 3, the lamp illumination unit 120 attached to the ceiling of the vehicle according to the embodiment of the present invention includes the first lamp 210, the second lamp 220, and the third lamp 230 such that the LED lamps of the lamp illumination unit 120 vertically illuminate the vehicle seat 110 in which the driver or occupant boarding the vehicle is seated.

Here, the first lamp 210 of the lamp illumination unit 120 is installed to the ceiling of the vehicle so as to have a first light distribution angle (15°) for illuminating a vehicle seat 110 which is moved forward and is then stopped.

In addition, the second lamp 220 of the lamp illumination unit 120 is installed to the ceiling of the vehicle so as to have a light distribution angle (0°) for vertically illuminating a vehicle seat 110 which is stopped at the reference position.

In addition, the third lamp 230 of the lamp illumination unit 120 is installed to the ceiling of the vehicle so as to have a light distribution angle (15°) for illuminating a vehicle seat 110 which is moved rearward from the reference position and is then stopped.

That is, when the state in which the second lamp 220 is installed to the ceiling of the vehicle so as to vertically illuminate the vehicle seat 110 is regarded as a reference state (a light distribution angle of 0°), the first lamp 210 is installed so as to be inclined upward and directed forward such that the light distribution angle thereof is, e.g., an angle of 15° with respect to the reference state, and the third lamp 230 is installed so as to be inclined upward and directed rearward such that the light distribution angle thereof is, e.g., an angle of 15° with respect to the reference state. Here, although the embodiment describes that the light distribution angles of the first and third lamps 210 and 230 have, e.g., an angular difference of 15° with respect to the light distribution angle (0°) of the second lamp 220 as the reference state such that the first and third lamps 210 and 230 are respectively directed forward and rearward, the present invention is not limited thereto. For example, the first and third lamps 210 and 230 may be installed to have different angles between 0° and 90° according to positions in which the vehicle seat 110 is moved forward or rearward and is then stopped.

Accordingly, as illustrated in Fig. 3, the first lamp 210 is turned on for illuminating a vehicle seat 110 which is moved forward from the reference position and is then stopped, the second lamp 220 is turned on for illuminating a vehicle seat 110 which is stopped at the reference position, and the third lamp 230 is turned on for illuminating a vehicle seat 110 which is moved rearward from the reference position and is then stopped.

In this case, each of the first, second, and third lamps 210, 220, and 230 illuminates the vehicle seat 110 at angles of 60° in left and right directions to a vertical line.

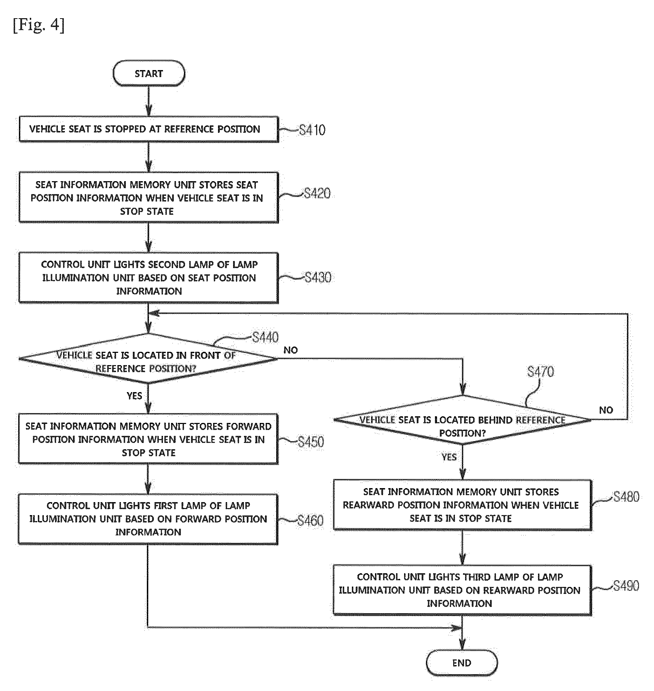

Fig. 4 is a flowchart for explaining a method for lighting a lamp operatively connected to a vehicle seat position according to an embodiment of the present invention.

In the system for lighting a lamp operatively connected to a vehicle seat position 100 according to the embodiment of the present invention, the second lamp 220 for illuminating the vehicle seat 110 located at the reference position, the first lamp 210 for illuminating the vehicle seat 110 which is moved forward from the reference position and is then stopped, and the third lamp 230 for illuminating the vehicle seat 110 which is moved rearward from the reference position and is then stopped, are installed to the ceiling of the vehicle, as illustrated in Fig. 3.

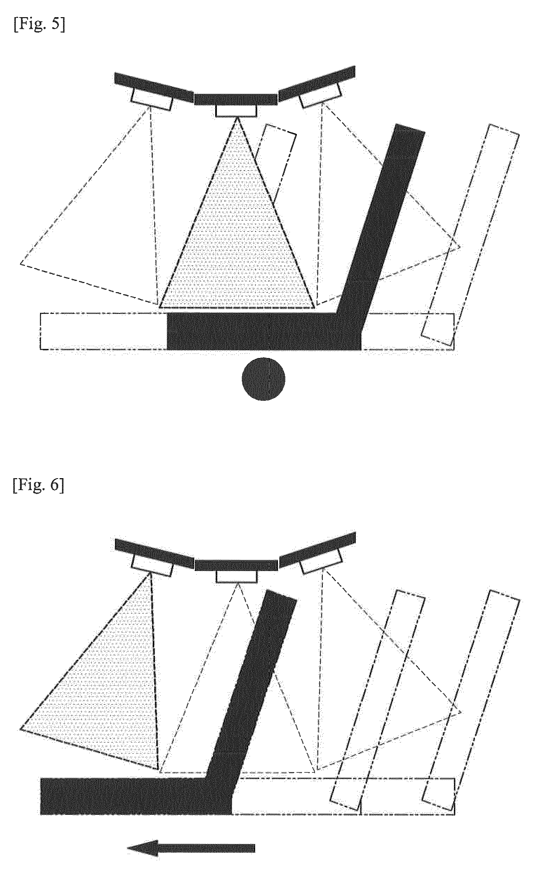

Referring to Fig. 4, in the system for lighting a lamp operatively connected to a vehicle seat position 100 according to the embodiment of the present invention, when the vehicle seat 110 is first stopped at the reference position (S410) as illustrated in Fig. 5, the seat information memory unit 130 stores seat position information when the vehicle seat 110 is in a stop state (S420). Fig. 5 is a view illustrating an example in which the second lamp located corresponding to the reference position is turned on and illuminates the vehicle seat located at the reference position, according to the embodiment of the present invention.

Accordingly, the control unit 140 lights the second lamp of the lamp illumination unit 120 so that the second lamp illuminates the vehicle seat 110 located at the reference position, as illustrated in Fig. 5, based on the seat position information stored in the seat information memory unit 130 (S430).

As illustrated in Fig. 6, when the vehicle seat 110 is moved forward of the vehicle by the driver or the occupant and is located in front of the reference position (S440), the seat information memory unit 130 stores forward position information when the vehicle seat 110 is moved and then stopped (S450). Fig. 6 is a view illustrating an example in which the first lamp is turned on and illuminates the vehicle seat located in front of the reference position, according to the embodiment of the present invention.

Accordingly, the control unit 140 lights the first lamp 210 of the lamp illumination unit 120 located corresponding to a current vehicle seat 110 so that the first lamp 210 illuminates the vehicle seat 110, as illustrated in Fig. 6, based on the forward position information (S460).

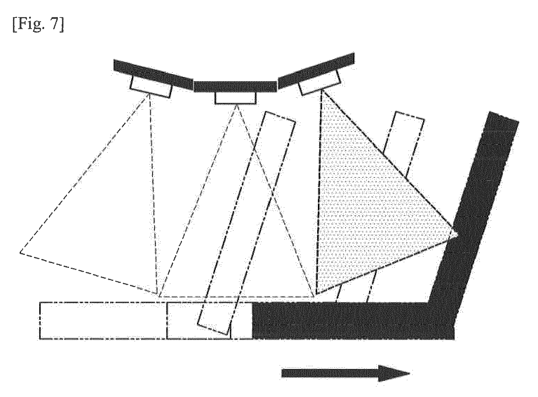

However, as illustrated in Fig. 7, when the vehicle seat 110 is moved rearward of the vehicle by the driver or the occupant and is located behind the reference position (S470), the seat information memory unit 130 stores rearward position information when the vehicle seat 110 is moved rearward from the reference position and is then stopped (S480). Fig. 7 is a view illustrating an example in which the third lamp is turned on and illuminates the vehicle seat located behind the reference position, according to the embodiment of the present invention.

Accordingly, the control unit 140 lights the third lamp 230 of the lamp illumination unit 120 located corresponding to a current vehicle seat 110 so that the third lamp 230 illuminates the vehicle seat 110 located behind the reference position, as illustrated in Fig. 7, based on the rearward position information (S490).

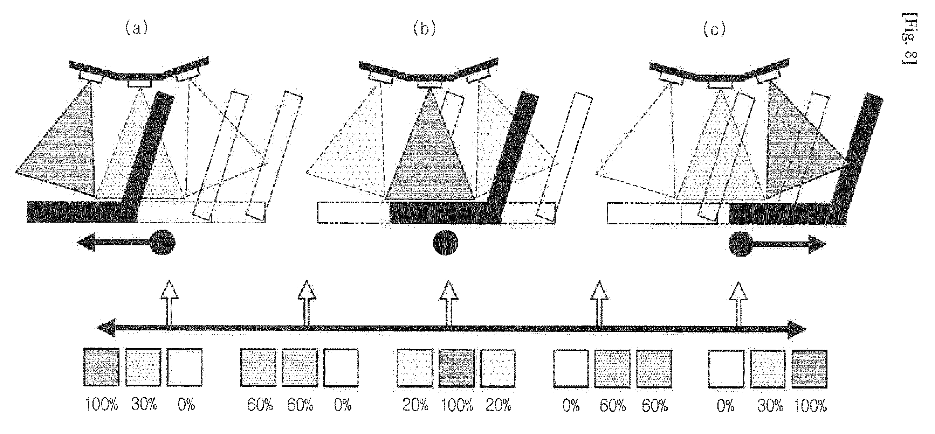

In this case, the control unit 140 may light one of the first, second, and third lamps 210, 220, and 230 according to the position of the moved seat, and adjust the light distribution angle of the lamp illumination unit 120. As illustrated in Fig. 8, the lamps having respective light distribution angles are adjusted to have different illumination brightness when they are turned on. Fig. 8 is a view illustrating examples in which the lamps having respective light distribution angles are adjusted to have different illumination brightness, according to the embodiment of the present invention.

That is, the control unit 140 may control the lighting of the first and second lamps 210 and 220 when the vehicle seat 110 is located in front of the reference position as illustrated in Fig. 8(a) such that the luminous intensity of the first lamp 210 is 100% and the luminous intensity of the second lamp 220 is 30%. Here, Fig. 8 is a view illustrating examples in which the luminous intensities of the respective lamps of the lamp illumination unit are adjusted according to the embodiment of the present invention. In addition, the control unit 140 may also control the lighting of the first and second lamps 210 and 220 such that the luminous intensities of the first and second lamps 210 and 220 are 60% and 60%, respectively.

Meanwhile, the control unit 140 may control the lighting of the second and third lamps 220 and 230 when the vehicle seat 110 is stopped at the reference position as illustrated in Fig. 8(b) such that the luminous intensity of the second lamp 220 is 100% and the luminous intensity of the third lamp 230 is 20%. Of course, the control unit 140 may also control the lighting of the second and third lamps 220 and 230 such that the luminous intensities of the second and third lamps 220 and 230 of the lamp illumination unit 120 are 60% and 60%, respectively.

In addition, the control unit 140 may control the lighting of the third lamp 230 when the vehicle seat 110 is located behind the reference position as illustrated in Fig. 8(c) such that the luminous intensity of the third lamp 230 is 100% and the luminous intensity of the second lamp 220 adjacent thereto is 30%.

Meanwhile, although the lamp located corresponding to the associated seat position is automatically turned on based on the seat position information according to the movement of the vehicle seat, and illuminates the associated vehicle seat at the light distribution angle corresponding thereto, the user may set the lamps so as to arbitrarily adjust the light distribution angles. That is, when the seat is moved forward from the reference position and is then located in front of the reference position, the user may manually light the first lamp such that the first lamp illuminates the seat located in front of the reference position.

In addition, the user may directly rotate a wheel having a rotary shaft and adjust a light distribution angle through matrix control. That is, the user may rotate the wheel of the second lamp 220 corresponding to the seat located at the reference position so as to adjust and set the illumination angle thereof, may rotate the wheel of the third lamp 230 corresponding to the seat located behind the reference position so as to adjust and set the illumination angle thereof, or may rotate the wheel of the first lamp 210 corresponding to the seat located in front of the reference position so as to adjust and set the illumination angle thereof.

In connection with LED lamps installed corresponding to a driver seat and an occupant seat, the LED lamp corresponding to the driver seat may be turned on for illuminating the driver seat when a driver is seated in the driver seat, as described above. In addition, when no one is seated in the occupant seat, the LED lamp corresponding to the occupant seat may not be turned on or may be turned on for illumination at the low level of brightness.

In accordance with the present invention described above, it is possible to realize the system and method for lighting a lamp operatively connected to a vehicle seat position, in which when the position of the driver seat or the occupant seat is moved forward or rearward in vehicle interior illumination, the lamp located corresponding to the seat position is automatically turned on and the lighting of the lamp is adjustable according to light distribution criteria for vehicle illumination.

As is apparent from the above description, in accordance with the present invention, it is possible to increase convenience since the turn-on position and brightness of a lamp vary according to a change in position of a vehicle seat varying according to the body type and driving habit of a driver.

In addition, it is possible to reduce costs of products by the application of the matrix beam pattern manner of an LED lamp, without using separate motors, actuators, and optical lenses for changing light distribution angles.

The present invention can be applied to a vehicle since having a structure in which the light distribution angles are changed using existing memory seat information without using separate measurement sensors and devices for sensing the movement of the vehicle seat.

Various embodiments have been described in the best mode for carrying out the invention. It will be understood that the above-mentioned technical configurations of the exemplary embodiments may be executed in order to enable those of ordinary skill in the art to embody and practice the invention in other specific forms without changing the spirit or essential features of the invention. Although the present invention has been described with respect to the illustrative embodiments, it will be apparent to those skilled in the art that various variations and modifications may be made without departing from the spirit and scope of the invention as defined in the following claims.

The present invention is applicable to a system and method for lighting a lamp operatively connected to a vehicle seat position, in which when the position of a driver seat or an occupant seat is moved forward or rearward in vehicle interior illumination, a lamp located corresponding to the seat position is automatically turned on and the lighting of the lamp is adjustable according to light distribution criteria for vehicle illumination.

## Claims

1. A system for lighting a lamp operatively connected to a vehicle seat position, comprising:
a vehicle seat movable forward or rearward;
a lamp illumination unit comprising one or more lamps corresponding to stop positions according to movement of the vehicle seat;
a seat information memory unit for storing seat position information according to the stop positions of the vehicle seat; and
a control unit for controlling the lamps such that the lamps corresponding to the stop positions of the vehicle seat are turned on for illuminating the vehicle seat corresponding thereto, based on the seat position information.

2. The system according to claim 1, wherein the lamp illumination unit comprises a second lamp having a second light distribution angle for illuminating a vehicle seat stopped at a reference position, a first lamp having a first light distribution angle for illuminating a vehicle seat which is moved forward from the reference position and is then stopped, and a third lamp having a third light distribution angle for illuminating a vehicle seat which is moved rearward from the reference position and is than stopped.

3. The system according to claim 1, wherein the seat information memory unit stores reference position information when the vehicle seat is stopped at a reference position, forward position information when the vehicle seat is moved forward from the reference position and is then stopped, and rearward position information when the vehicle seat is moved rearward from the reference position and is then stopped.

4. The system according to claim 3, wherein the control unit controls a first lamp such that the first lamp is turned on for illuminating a vehicle seat, which is moved forward from the reference position and is then stopped, when the seat position information stored in the seat information memory unit is the forward position information, controls a second lamp such that the second lamp is turned on for illuminating a vehicle seat, which is stopped at the reference position, when the seat position information stored in the seat information memory unit is the reference position information, and controls a third lamp such that the third lamp is turned on for illuminating a vehicle seat, which is moved rearward from the reference position and is then stopped, when the seat position information stored in the seat information memory unit is the rearward position information.

5. The system according to claim 3, wherein the control unit adjusts brightness of first, second, and third lamps when they are turned on, and controls the first, second, and third lamps for illuminating the associated vehicle seat.

6. A method for lighting a lamp operatively connected to a vehicle seat position in a system having one or more lamps corresponding to stop positions according to movement of a vehicle seat, the method comprising:
(a) stopping the vehicle seat at a reference position or moving the vehicle seat forward or rearward from the reference position;
(b) storing seat position information, when the vehicle seat is moved and then stopped, in a seat information memory unit; and
(c) lighting lamps corresponding to the positions of the vehicle seat, based on the seat position information stored in the seat information memory unit, by a control unit.

7. The method according to claim 6, wherein, in the above (a), in a state in which a second lamp having a second light distribution angle for illuminating a vehicle seat stopped at the reference position, a first lamp having a first light distribution angle for illuminating a vehicle seat which is moved forward from the reference position and is then stopped, and a third lamp having a third light distribution angle for illuminating a vehicle seat which is moved rearward from the reference position and is than stopped, are installed to a ceiling of a vehicle, the vehicle seat is stopped at the reference position or is moved forward or rearward from the reference position.

8. The method according to claim 6, wherein, in the above (b), the seat information memory unit stores reference position information when the vehicle seat is stopped at the reference position, forward position information when the vehicle seat is moved forward from the reference position and is then stopped, and rearward position information when the vehicle seat is moved rearward from the reference position and is then stopped.

9. The method according to claim 8, wherein, in the above (c), the control units controls a first lamp such that the first lamp is turned on for illuminating a vehicle seat, which is moved forward from the reference position and is then stopped, when the seat position information stored in the seat information memory unit is the forward position information, controls a second lamp such that the second lamp is turned on for illuminating a vehicle seat, which is stopped at the reference position, when the seat position information stored in the seat information memory unit is the reference position information, and controls a third lamp such that the third lamp is turned on for illuminating a vehicle seat, which is moved rearward from the reference position and is then stopped, when the seat position information stored in the seat information memory unit is the rearward position information.

10. The method according to claim 8, wherein, in the above (c), the control unit adjusts brightness of first, second, and third lamps when they are turned on, and controls the first, second, and third lamps for illuminating the associated vehicle seat.
